# EUROPÄISCHE PATENTSCHRIFT

(11) **EP 2 451 652 B1**
(45) Veröffentlichungstag und Bekanntmachung des Hinweises auf die Patenterteilung: **29.05.2013**
(21) Anmeldenummer: 10730363.8
(22) Anmeldetag: 01.07.2010
(51) Int. Cl.: B42D 15/10, G06K 19/077, B32B 38/18, B32B 38/10

(54) **VERFAHREN UND VORRICHTUNG ZUR HERSTELLUNG EINES INLAYS FÜR EINEN FOLIENVERBUND**
METHOD AND APPARATUS FOR PRODUCING AN INLAY FOR A FILM COMPOSITE
PROCÉDÉ ET DISPOSITIF DE FABRICATION D'UN SUBSTRAT POUR UN COMPOSITE PELLICULAIRE

(30) Priorität: 09.07.2009 DE 102009032678
(43) Veröffentlichungstag der Anmeldung: 16.05.2012
(73) Patentinhaber: Bundesdruckerei GmbH, 10969 Berlin (DE)
(72) Erfinder: MUTH, Oliver, 12277 Berlin (DE); DONATH, Denis, 16348 Wandlitz (DE); KLOESER, Joachim, 10779 Berlin (DE); HAGEMANN, Michael, 13465 Berlin (DE)
(74) Vertreter: Maser, Jochen
(86) Internationale Anmeldenummer: PCT/EP2010/003865
(87) Internationale Veröffentlichungsnummer: WO 2011/003518

(56) Entgegenhaltungen:
- EP-A1- 2 100 730
- US-A1- 2009 075 027

## Beschreibung

Die Erfindung betrifft ein Verfahren und eine Vorrichtung zur Herstellung eines Inlays für einen Folienverbund, insbesondere ein Inlay für die Weiterverarbeitung zu einem Wert- oder Sicherheitsdokument, wie beispielsweise in Form einer Smart Card, sowie einen Folienverbund mit einem Inlay.

Bei der Fertigung von Smart Cards werden elektronische Bauelemente in der Regel auf eine Trägerfolie aufgebracht. Bei diesen elektronischen Bauelementen handelte es sich zumeist um einen Halbleiterchip sowie die dazugehörigen Antennenspulen.

Aus der WO 2006/092273 A1 sind auch vorlaminierte Innenlagen bekannt, sogenannte Prelaminate, bei denen die elektrischen Bauelemente in einen Folienverbund bereits einlaminiert sind und dieses Halbzeug dann mit den übrigen Folien zu einer Karte gefügt wird. Darüber hinaus können alternativ zum einzelnen Halbleiterchip auch ganze Module, bestehend aus aktiven und passiven Bauelementen auf eine Trägerfolie aufgebracht/bestückt werden. Dazu zählen Spulen, Kondensatoren, Anzeigeelemente, wie Displays, Batterien und natürlich Integrierte Schaltkreise (IC) mit Mikroprozessoren und/oder Speicher.

Diese Trägerfolie mit den darauf aufgebrachten elektronischen Bauelementen oder Modulen wird mit weiteren Folien zu einem Kartenkörper zusammengefügt und laminiert. Dazu ist es oftmals erforderlich, dass durch die elektronischen Bauelemente, insbesondere Halbleiterchips entstehenden Höhendifferenzen mit einer entsprechenden Ausgleichsfolie ausgeglichen werden, wobei in die Ausgleichsfolie Aussparungen zur Aufnahme der Halbleiterchips eingebracht sind. Bislang ist es für industrielle Prozesse notwendig, dass die Aussparungen in solche Ausgleichsfolien mit relativ großen Toleranzen bezüglich der Position und Größe der Halbleiterchips gefertigt werden, um die automatische Weiterverarbeitung zu ermöglichen. Die bestückte Trägerfolie und die Ausgleichsfolie bilden zusammen das Inlay. Auf der Oberfläche der Ausgleichsfolie sind Steuermarken erforderlich, die passergenau zur Trägerfolie mit den elektronischen Bauelementen und zum Ausschnitt sind, um eine exakte Herstellung eines Inlays, bestehend aus einer Trägerfolie mit elektronischen Bauelementen und der Ausgleichsfolie, zur Weiterverarbeitung mit weiteren Folien zu einem Kartenkörper oder einem Wert- oder Sicherheitsdokument zu ermöglichen.

Aus dem Stand der Technik ist es bekannt, in z.B. mit Steuermarken bedruckte Rollen von Ausgleichsfolien Aussparungen auszustanzen und diese mit der aufnehmenden Trägerfolie passergenau zusammenzutragen. Aufgrund von Toleranzen bei der Fertigung der Trägerfolien mit den elektronischen Bauelementen oder Modulen, die sowohl in der abweichenden Position in X- und Y-Richtung zur Trägerfolie als auch in einer verdrehten beziehungsweise schiefen Lage in der Fläche der Folie gesehen auftreten, kann es beispielsweise bei der Herstellung von Smart Cards vorkommen, dass die Ausschnitte der Ausgleichsfolien nicht passergenau zum Bauelement auf der Trägerfolie positioniert werden, sondern sich teilweise auf dem elektronischen Bauelement überlappen. Dadurch kann es infolge übermäßiger mechanischer Belastung beim Laminieren des Inlays mit weiteren Folien oder Lagen zu Beschädigungen des oder der Bauelemente kommen. Zudem ist eine aufwändige Herstellung mit mehreren separaten Arbeitsgängen erforderlich, und zwar das Aufdrucken der Steuermarke in einem separaten Arbeitsgang, zum Stanzen der Aussparungen und in einem weiteren separaten Arbeitsgang ein passergenaues Heften der Ausgleichsfolie mit der Trägerfolie und den darauf aufgebrachten elektronischen Bauelementen oder Modulen.

Der Erfindung liegt deshalb die Aufgabe zugrunde, ein Verfahren und eine Vorrichtung zur Herstellung eines Inlays aus einer mit elektronischen Bauelementen oder Modulen bestückten Trägerfolie und einer entsprechend fixierten Ausgleichsfolie für einen Folienverbund sowie einen Folienverbund mit einem solchen Inlay vorzuschlagen" bei welchem die ' Passergenauigkeit zwischen einer Aussparung der Ausgleichsfolie und der Trägerfolie erhöht wird, sowie gleichzeitig eine Steuermarke exakt zum zumindest einen elektronischen Bauelement als Nutzen oder zu einer Gruppe von Nutzen für die Weiterverarbeitung aufgebracht wird.

Diese Aufgabe wird erfindungsgemäß durch ein Verfahren zur Herstellung eines Inlays für einen Folienverbund, insbesondere für die Weiterverarbeitung zu einem Wert- oder Sicherheitsdokument, gemäß den Merkmalen des Anspruchs 1 gelöst. Weitere vorteilhafte Ausgestaltungen und Weiterbildungen sind in den weiteren Ansprüchen angegeben.

Durch das erfindungsgemäße Verfahren wird ermöglicht, dass die aus dem Stand der Technik bekannten drei separaten Arbeitsgänge in aufeinanderfolgende Arbeitsschritte zusammengefasst werden, so dass nach dem Durchlaufen sämtlicher Bearbeitungsschritte die Ausgleichsfolie passergenau zur Trägerfolie als Inlay angeordnet wird, wobei insbesondere eine Halbleiterchip-zu-Aussparung-Genauigkeit sowie eine Steuermarken-zu-Aussparung-Genauigkeit zur Weiterverarbeitung des Inlays erzielt wird. Durch die Erfassung der Position der jeweiligen elektronischen Bauelemente, insbesondere des Halbleiterchips, auf der Trägerfolie, und die Weiterleitung der erfassten Daten an eine Laserschneideinrichtung zur Herstellung der Aussparungen wird ermöglicht, dass bei der Einbringung der jeweiligen Aussparung die Toleranzen in der Position des darin einzubringenden elektronischen Bauelementes berücksichtigt und entsprechend die Aussparung an die Position und Ausrichtung des elektronischen Bauelementes anpasst wird. Darüber hinaus werden die erfassten Daten zur Position des jeweiligen elektronischen Bauelementes gleichzeitig für die Aufbringung einer Steuermarke auf die Ausgleichsfolie verwendet, so dass für jeden Nutzen oder eine Gruppe von Nutzen eine Steuermarke auf die Ausgleichsfolie in Abhängigkeit der erfassten Position des elektronischen Bauelementes auf der Trägerfolie aufgebracht wird. Somit wird sichergestellt, dass ausgehend von den tatsächlich erfassten Daten über die Position und Lage des elektronischen Bauelementes sowohl die Aussparung als auch die Steuermarke in die Ausgleichsfolie eingebracht beziehungsweise auf die Ausgleichsfolie aufgebracht wird, wodurch eine Ausgleichslage mit hochpräzisen Aussparungen beziehungsweise ein hochpräzises Inlay hergestellt wird, welches durch die exakte Einbringung der Steuermarke oder Steuermarken eine sichere Weiterverarbeitung ermöglicht. Die bereits aufgebrachte Steuermarke hat dann den weiteren Vorteil, die nachfolgenden automatischen Weiterverarbeitungsschritte, wie z.B. das Zusammentragen mit anderen Folien zu einem Folienverbund, zu ermöglichen bzw. zu vereinfachen.

Nach einer vorteilhaften Ausgestaltung des Verfahrens wird vor dem passergenauen Zusammenführen der Ausgleichsfolie und der Trägerfolie für jeden Nutzen oder jede Gruppe von Nutzen die Steuermarke aufgebracht. Dadurch kann die Steuermarke gleichzeitig mit der Herstellung der Aussparung auf die Ausgleichsfolie aufgebracht werden. Alternativ kann dies auch unmittelbar vor oder nach dem Einbringen einer Aussparung erfolgen, wobei das Aufbringen der Steuermarke vor dem Zusammenführen der Ausgleichsfolie und der Trägerfolie den Vorteil aufweist, dass die Steuermarke bei einer gleichen Bahnspannung wie die Einbringung der Aussparung erfolgt, wodurch eine besonders präzise Einbringung ermöglicht wird.

Nach einer bevorzugten Ausgestaltung des Verfahrens wird zum Einbringen der Aussparung in die Ausgleichsfolie eine Laserschneideinrichtung mit einer hohen Leistung betrieben und dieselbe Laserschneideinrichtung zur Herstellung der Steuermarken verwendet, wobei diese vorzugsweise mit niedrigerer Leistung betrieben wird. Dadurch kann eine Schwärzung der Ausgleichsfolie erfolgen. Dieses Verfahren weist den Vorteil auf, dass nur eine Laserschneideinrichtung erforderlich ist, um die Aussparungen und die Steuermarken in die Ausgleichsfolie einzubringen beziehungsweise aufzubringen.

Eine alternative Ausgestaltung des Verfahrens sieht vor, dass vor dem Zusammenführen der Ausgleichsfolie und der Trägerfolie die Laserschneideinrichtung zum Herstellen der Aussparung mit hoher Leistung betrieben und eine weitere Laserschneideinrichtung oder Markierungseinrichtung zur Herstellung der Steuermarke angesteuert wird. Bei diesem Verfahren werden die Ausstanzungen und Steuermarken getrennt nacheinander hergestellt. Eine solche Anordnung ermöglicht besonders hohe Bahngeschwindigkeiten und somit Verarbeitungsgeschwindigkeiten zur Herstellung des Inlays.

Nach einer alternativen Ausgestaltung des Verfahrens wird nach der Herstellung des Inlays auf die Ausgleichsfolie durch eine weitere Laserschneideinrichtung oder Markierungseinrichtung für jeden Nutzen oder jede Gruppe von Nutzen die Steuermarke aufgebracht. Diese Anordnung ermöglicht ebenfalls eine hohe Verarbeitungsgeschwindigkeit, da die Aussparungen durch eine separate Laserschneideinrichtung und die Steuermarken durch eine davon getrennte Laserschneideinrichtung oder Markierungseinrichtung eingebracht werden.

Nachdem in die Ausgleichsfolie zumindest entsprechend jedem Nutzen eine Aussparung eingebracht wurde, erfolgt ein passergenaues Zusammenführen der Ausgleichsfolie und der Trägerfolie mit den elektronischen Bauelementen in einer Zusammenführstation zu einem Inlay, wobei bevorzugt in der Zusammenführstation die Trägerfolie und die Ausgleichsfolie passergenau zueinander geheftet werden. Dadurch wird sichergestellt, dass die einmal exakt ausgerichtete Position der Aussparung zum Nutzen beziehungsweise elektronischen Bauelement aufrechterhalten wird, so dass bei einer Weiterverarbeitung eine gegenseitige Verschiebung der Folien aus dieser exakten Position verhindert ist. Bevorzugt erfolgt die Heftung durch eine semikalte Verbindung, wie beispielsweise Ultraschallschweißen oder Reibschweißen. Eine semikalte Verbindung kann auch durch Erwärmung der Trägerfolie und Ausgleichsfolie, wie beispielsweise Ultraschallschweißen oder Reibschweißen oder auch durch Erwärmung der Trägerfolie und Ausgleichsfolie, erfolgen, so dass diese miteinander verklebt oder verschweißt werden. Diese Heftung kann punkt-, strich- oder linienförmig ausgebildet sein und erfolgt keineswegs vollflächig.

Des Weiteren werden die Trägerfolie und die Ausgleichsfolie bevorzugt durch die Aufbringung einer Zugspannung transportiert. Dadurch kann ein kontrollierter und gleichmäßiger Abzug der bevorzugt als Rollenware bereitgestellten Ausgleichsfolie und Trägerfolie ermöglicht werden.

Nach einer weiteren bevorzugten Ausgestaltung der Erfindung werden die Ausgleichsfolie und Trägerfolie mit einer Verarbeitungsgeschwindigkeit von 1 m/min bis 20 m/min, vorzugsweise 5 m/min bis 15 m/min zusammengeführt. Aufgrund der umgehenden Verarbeitung der erfassten Daten über die Position des jeweiligen elektronischen Bauelementes und die sofortige Einbringung von Aussparungen in die Ausgleichsfolie sowie die Verwendung der erfassten Daten für die Aufbringung der Steuermarken können solch hohe Verarbeitungsgeschwindigkeiten erzielt werden.

Die Trägerfolie als auch die Ausgleichsfolie werden bevorzugt als Rollenware bereitgestellt. Alternativ können auch Bogen zur Herstellung des Inlays beziehungsweise kann auch eine Bogen-Rollen Kombination verwendet werden.

Nach der Herstellung des Inlays durch die Ausgleichsfolie und die Trägerfolie sowie der Aufbringung der Steuermarken auf die Ausgleichsfolie wird das Inlay auf ein Bogenformat geschnitten, so dass einzelne Bogen des Inlays für die Weiterverarbeitung bereitgestellt werden. Diese können vorzugsweise gestapelt werden. Alternativ können sich weitere Bearbeitungslinien zur Weiterverarbeitung der Bogen an die Herstellung des Inlays anschließen.

Des Weiteren sind auf der Trägerfolie bevorzugt Mehrfachnutzen vorgesehen. Beispielsweise können zwölf oder vierundzwanzig Nutzen vorgesehen sein. In solchen Fällen kann es auch genügen, dass eine Steuermarke für einen solchen Mehrfachnutzen oder eine Gruppe von Nutzen aufgebracht wird.

Des Weiteren werden bevorzugt von jedem Nutzen die Koordinaten in Bahnförderrichtung und quer zur Bahnförderrichtung, also in X- und Y-Richtung, erfasst und diese an eine Datenverarbeitung weitergeleitet, damit darauf aufbauend die Daten für die Herstellung von Aussparungen und Steuermarken aufbereitet werden. Dabei werden bevorzugt sowohl die Trägerfolie als auch die Ausgleichsfolie entlang einer aufeinander abgestimmten Bahnführung geführt, so dass eine exakte Einbringung der Aussparungen und Aufbringung der Steuermarken ermöglicht ist.

Die der Erfindung zugrunde liegende Aufgabe wird des Weiteren durch ein Verfahren zur Herstellung eines Folienverbundes gelöst, bei dem auf einer oder beiden Außenseiten eines nach einem der Ansprüche 1 bis 12 hergestellten Inlays zumindest eine Folie oder eine Schicht aufgebracht wird. Dadurch kann der Folienverbund für eine Weiterverarbeitung zu einem Wert- oder Sicherheitsdokument vorbereitet werden. Ebenso kann alternativ vorgesehen sein, dass durch das Aufbringen von zumindest einer Folie oder Schicht der Folienverbund direkt als Wert- oder Sicherheitsdokument fertiggestellt wird. Beispielsweise kann das Wert- oder Sicherheitsdokument eine Banknote sein. Auf eine erste Lage eines Banknotenmaterials, wie beispielsweise Baumwolle, Kunststoff oder einer aus Fasern bestehenden Schicht oder dergleichen, wird das erfindungsgemäß hergestellte Inlay aufgebracht. Anschließend wird zumindest eine Deckschicht auf die gegenüberliegende Seite des Inlays, d.h. auf die Ausgleichsfolie, aufgebracht und die Banknote in einem Laminierverfahren hergestellt sowie das Inlay einlaminiert. Ebenfalls denkbar ist, das mit einer Deckfolie versehende Inlay zu laminieren und auf die Banknote z.B. mittels Kleber aufzubringen. Ebenso kann der Folienverbund eine Bankkarte, ein Zutrittsausweis, wie beispielsweise ein Betriebsausweis als auch ein Identifikationsdokument, wie beispielsweise Führerschein, Personalausweis, elektronische Gesundheitskarte oder dergleichen, sein, welcher entsprechend dem Anwendungsfall angepasst mit einer oder mehreren Folien oder Schichten mit gleicher oder unterschiedlicher Dicke und/oder Material ausgebildet ist.

Die der Erfindung zugrunde liegende Aufgabe wird des Weiteren durch die Vorrichtung zur Herstellung eines Inlays gemäß den Merkmalen des Anspruchs 12 gelöst. Diese Vorrichtung umfasst eine Transportfördereinrichtung für die Trägerfolie mit den sich darauf befindenden elektronischen Bauelementen als auch für die Ausgleichsfolie. Darüber hinaus ist eine Bilderfassungseinrichtung zur Erfassung der Position des elektronischen Bauelements als Nutzen auf der Trägerfolie vorgesehen. Des Weiteren ist zumindest eine Laserschneideinrichtung der Ausgleichsfolie zugeordnet, um Aussparungen einzubringen. Darüber hinaus ist eine Datenverarbeitungsanlage vorgesehen, welche die erfassten Daten der Bilderfassungseinrichtung aufnimmt und entsprechend für die Laserschneideinrichtung aufbereitet und zur Ansteuerung ausgibt, damit die Aussparung in die Ausgleichsfolie eingebracht werden. Sofern diese Vorrichtung nur eine Laserschneideinrichtung aufweist, die der Ausgleichsfolie zugeordnet ist, bevor diese mit der Trägerfolie zusammengeführt wird, bereitet die Datenerfassungseinrichtung die entsprechend erfassten Daten derart auf, dass die Laserschneideinrichtung zum einen zum Einbringen der Aussparungen und zum anderen zum Markieren der Ausgleichsfolie durch Steuermarken angesteuert wird. Sofern zusätzlich zur Laserschneideinrichtung für die Herstellung von Aussparungen eine weitere Laserschneideinrichtung oder Markierungseinrichtung vorgesehen ist, wird die eine oder die andere zusätzliche Einrichtung zum Markieren der Ausgleichsfolie entsprechend angesteuert.

Nach einer weiteren vorteilhaften Ausgestaltung der Erfindung umfasst die Zusammenführstation eine Bahnführung zur passergenauen Positionierung der Trägerfolie und Ausgleichsfolie und anschließenden Fixierung der Träger- und Ausgleichsfolie.

Eine weitere vorteilhafte Ausgestaltung der Vorrichtung sieht vor, dass die Markierungseinrichtung als Lasermarkierungseinrichtung, als Digitaldruckeinrichtung oder Ink-Jet-Druckeinrichtung ausgebildet ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht der erfindungsgemäßen Vorrichtung zur Herstellung eines Inlays und
- Figur 2: eine perspektivische Ansicht einer alternativen Ausführungsform der Vorrichtung zu Figur 1.

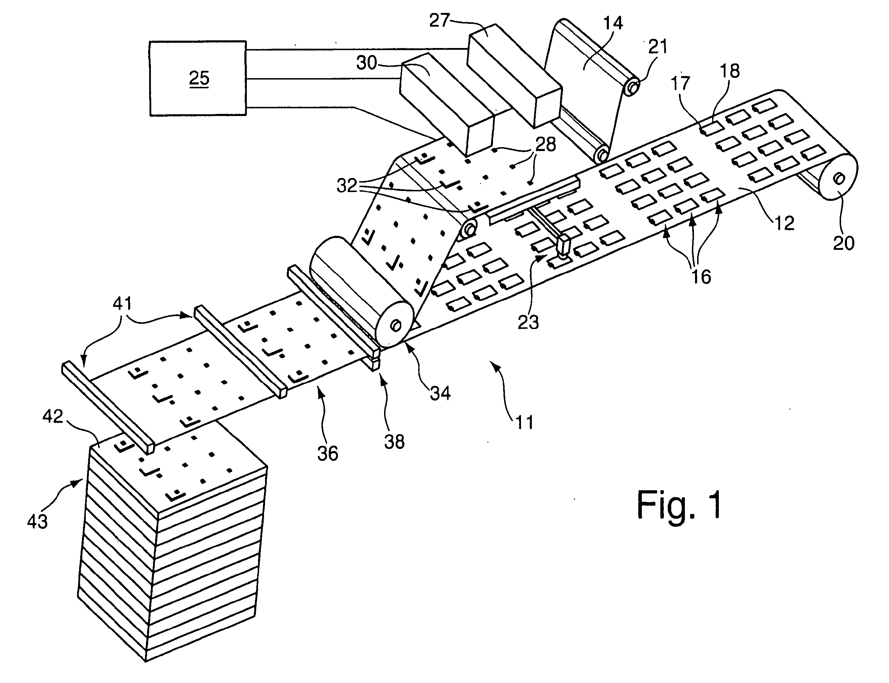

In Figur 1 ist perspektivisch eine erfindungsgemäße Vorrichtung 11 zur Herstellung eines Inlays 36, insbesondere für die Weiterverarbeitung zu einem Wert- oder Sicherheitsdokument, wie beispielsweise einer Smart Card, perspektivisch dargestellt. Diese Vorrichtung 11 umfasst eine nicht näher dargestellte Transporteinrichtung für eine Trägerfolie 12 sowie eine teilweise durch Umlenkrollen dargestellte Transportvorrichtung für eine Ausgleichsfolie 14. Die Trägerfolie 12 besteht beispielsweise aus thermoplastisch verarbeitbaren Polymeren wie Polyolefinen (Polyethylen, Polypropylen), Polyester, Polycarbonate (PC), Polyvinylchlorid, Polystyrol und Mischungen (Polymerblends, CoPolymere) wie beispielsweise AcrylnitrilButadienStyrol-Copolymer (ABS) sowie sonstigen einschlägig bekannten Materialien zur Herstellung von Smart Cards, insbesondere aus Polycarbonat (PC) beziehungsweise modifiziertem PC. Auf dieser Trägerfolie 12 sind mehrere Nutzen 16 aufgebracht, die beispielsweise zu einer Gruppe von Nutzen 16 als Mehrfachnutzen zusammengefasst sind. Der Nutzen 16 umfasst elektronische Bauelemente 17, 18 und ist beispielsweise aus einem Halbleiterchip 17 und dazugehörigen Antennenspulen 18 gebildet.

Die Ausgleichsfolie 14 wird bevorzugt unbedruckt bereitgestellt und besteht aus den für die Trägerfolie (12) genannten thermoplastischen Materialien, insbesondere aus Polycarbonat (PC). Bevorzugt ist die Ausgleichsfolie 14 lasersensitiv ausgebildet. Sowohl die Trägerfolie 12 als auch die Ausgleichsfolie 14 werden bevorzugt als Rollenware auf jeweils einer Rolle 20, 21 bereitgestellt. Alternativ kann die Trägerfolie 12 und/oder Ausgleichsfolie 14 auch als Bogenware bereitgestellt werden beziehungsweise aus einer Kombination Bogen und Rolle.

Die Trägerfolie 12 wird an einer Bilderfassungseinrichtung 23 vorbeigeführt, wobei vorzugsweise digital jeder Halbleiterchip 17 in seiner Position und Ausrichtung erfasst wird. Die in der Bilderfassungseinrichtung 23 erfassten Daten werden an eine Datenverarbeitungseinrichtung 25 weitergeleitet und dort verarbeitet. Parallel oder der Bilderfassungseinrichtung 23 nachgeschaltet werden über eine Laserschneideinrichtung 27 Aussparungen 28 in die Ausgleichsfolie 14 eingebracht. Dabei werden die durch die Bilderfassungseinrichtung 23 erfassten Daten und durch die Datenverarbeitungseinrichtung 25 aufbereiteten Daten verwendet, damit die Laserschneideinrichtung 27 entsprechend der Lage und Ausrichtung des jeweiligen Halbleiterchips 17 die dazugehörige Aussparung 28 einbringt. Benachbart zur Laserschneideinrichtung 27 ist eine weitere Laserschneideinrichtung oder Markierungseinrichtung 30 angeordnet, welche Steuermarken 32 auf die Ausgleichsfolie 14 aufbringt. Diese Laserschneidrichtung oder Markierungseinrichtung 30 wird wiederum mit den durch die Bilderfassungseinrichtung 23 von dem jeweiligen Halbleiterchip 17 erfassten Daten über die Datenverarbeitungseinrichtung 25 versorgt und entsprechend angesteuert. Dabei kann vorgesehen sein, dass jeder Aussparung 28 eine Steuermarke 32 zugeordnet wird. Des Weiteren kann vorgesehen sein, dass einem Mehrfachnutzen beziehungsweise einer Gruppe von Nutzen 16 nur eine Steuermarke 32 zugeordnet wird oder dass einer vorbestimmten Anzahl von Nutzen innerhalb einer Gruppe des Nutzens eine oder mehrere Steuermarken 32 zugeordnet werden. Die Laserschneideinrichtung kann dabei derart angesteuert werden, dass die lasersensitive Ausgleichsfolie 14 geschwärzt wird. Sofern eine Markierungseinrichtung 30 eingesetzt wird, kann ein Digitaldruck, ein Ink-Jet-Druck oder dergleichen vorgesehen sein.

Alternativ zur benachbarten Anordnung der Laserschneideinrichtung oder Markierungseinrichtung 30 zur Laserschneideinrichtung 27 kann auch nur eine Laserschneideinrichtung 27 vorgesehen sein, welche sowohl die Aussparungen 28 einbringt als auch die Steuermarken 32 aufbringt.

Die unmittelbare Ansteuerung der Laserschneideinrichtung 27 zur Einbringung der Aussparungen 28 anhand der erfassten Daten des Halbleiterchips 17 ermöglicht, dass Abweichungen in der Position und Ausrichtung des Halbleiterchips 17 auch bei der Einbringung der Aussparung 28 berücksichtigt werden. Dadurch wird bei einem nachfolgenden Zusammenführen der Ausgleichsfolie 14 und der Trägerfolie 12 in einer Zusammenführstation 34 eine Halbleiterchip-zu-Aussparung-Genauigkeit bei der Herstellung eines Inlays 36 aus der Trägerfolie 12 und der Ausgleichsfolie 14 ermöglicht. Des Weiteren wird durch die unmittelbare Ansteuerung der Laserschneideinrichtung 27 oder Markierungseinrichtung 30 zum Aufbringen der Steuermarken 32 diese wiederum exakt zur Aussparung 28 und vor allem exakt zum Halbleiterchip 17 angebracht, so dass eine Steuermarke-zu-Halbleiterchip-Genauigkeit oder Steuermarke-zu-Aussparung-Genauigkeit für die Weiterverarbeitung ermöglicht wird. In der Zusammenführstation 34 werden die Trägerfolie 12 und die Ausgleichsfolie 14 passergenau einander zugeordnet, wobei vorzugsweise eine nicht näher dargestellte Folienbahnsteuerung vorgesehen ist, um eine Trägerfolie-zu-Ausgleichsfolien-Genauigkeit zu erzielen.

Der Zuführstation 34 nachgeschaltet ist eine Heftstation 38 vorgesehen, welche die Ausgleichsfolie 14 und Trägerfolie 12 in deren passergenauen Anordnung zueinander heftet. Dabei ist bevorzugt eine semikalte Verschweißung mittels Ultraschall beziehungsweise Reibschweißen vorgesehen beziehungsweise kann auch eine Erwärmung der Trägerfolie 12 und Ausgleichsfolie 14 vorgesehen sein. Anschließend wird das Inlay 36 einer Bogenschneidstation 41 zugeführt, in der einzelne Bögen 42 bestehend aus dem Inlay 36 geschnitten werden. Bevorzugt werden diese in einem Stapel 43 gesammelt.

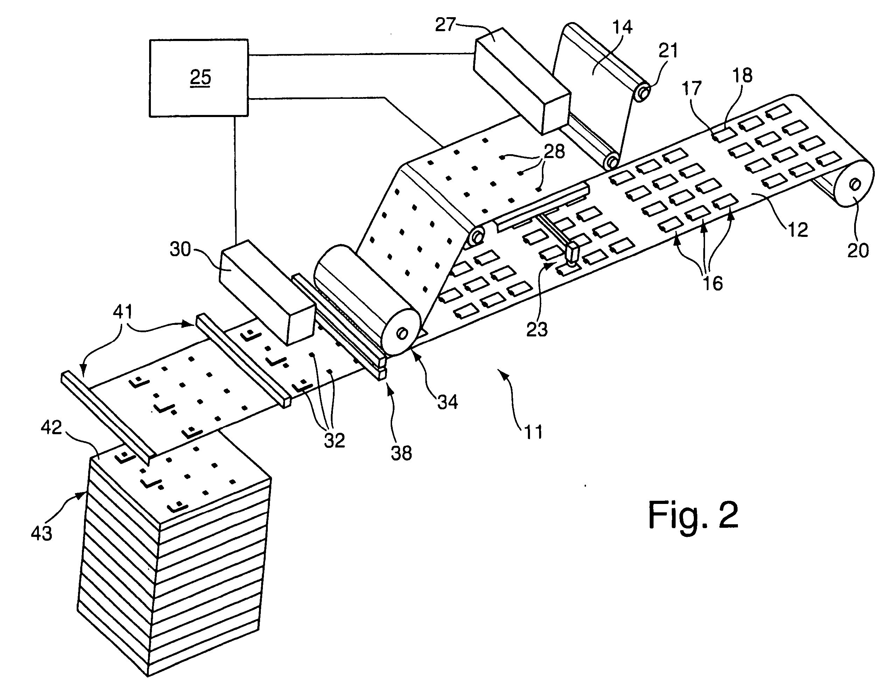

In Figur 2 ist eine alternative Ausgestaltung der Vorrichtung 11 zu Figur 1 dargestellt, wobei diese dahingehend von Figur 1 abweicht, dass die Markierungseinrichtung 30 die Steuermarken 32 auf die Ausgleichsfolie 14 aufbringt, nachdem die Ausgleichsfolie 14 mit der Trägerfolie 12 zu einem Inlay 36 geheftet wurde. Im Übrigen gelten dieselben Vorteile und Ausführungsvarianten, die zu Figur 1 beschrieben wurden.

Das durch ein Verfahren gemäß Figur 1 oder Figur 2 hergestellte Inlay 36 kann durch Auflaminieren oder Aufkaschieren von einer oder mehreren Folien oder einer oder mehreren Materiallagen aus gleichen oder unterschiedlichen Materialien und/oder Schichtdicken zu einem Folienverbund weiterverarbeitet werden. Dieser Folienverbund kann in einer ersten alternativen Ausführungsform wiederum ein Zwischenprodukt zur Herstellung eines Wert- oder Sicherheitsdokuments dienen. Beispielsweise kann der Folienverbund in einem Kartenkörper zur Herstellung einer Smart Card eingefügt oder eingebunden werden. Alternativ kann vorgesehen sein, dass durch das Aufkaschieren oder Auflaminieren von einer oder mehreren Lagen oder Schichten auf das Inlay ein Folienverbund geschaffen wird, der das Wert- oder Sicherheitsdokument selbst beziehungsweise das Endprodukt darstellt. Der Folienverbund kann als Zutrittsausweis, als Identifikationsdokument, wie beispielsweise Führerschein oder dergleichen, ausgebildet sein. Der Begriff "Folienverbund" ist dabei nicht dahingehend eingeschränkt zu verstehen, dass ausschließlich Folien aus Kunststoff vorgesehen sind. Vielmehr ist darunter ein Schichtaufbau zu verstehen, der das gemäß dem in Figur 1 oder Figur 2 beschriebenen Verfahren hergestellte Inlay 36 umfasst, auf welchem ein-und/oder beidseitig eine oder mehrere Schichten aus verschiedenen Materialien auch abweichend von Kunststoffmaterialien aufgebracht werden können. Es können beispielsweise auch verschiedene Materialien beziehungsweise Materialmischungen und/oder Materialstärken vorgesehen sein, um ein Wert- oder Sicherheitsdokument aufzubauen.

## Patentansprüche

1. Verfahren zur Herstellung eines Inlays (36) für einen Folienverbund, insbesondere ein Inlay für die Weiterverarbeitung zu einem Wert- oder Sicherheitsdokument,
- bei dem eine Trägerfolie (12) mit mehreren darauf angeordneten und einander zugeordneten elektronischen Bauelementen (17, 18) einer Bilderfassungseinrichtung (23) zugeführt wird, durch welche zumindest die Position von einem elektronischen Bauelement (17, 18) als Nutzen (16) erfasst wird,
- bei dem eine auf der Trägerfolie (12) aufzubringende lasersensitive Ausgleichsfolie (14) zunächst einer Laserschneideinrichtung (27) zugeführt wird,
- bei dem die durch die Bilderfassungseinrichtung (23) erfassten Daten über die Position des jeweiligen elektronischen Bauelementes (17, 18) auf der Trägerfolie (12) an die Laserschneideinrichtung (27) übermittelt werden und die Laserschneideinrichtung (27) zur Herstellung von Aussparungen (28), die an die jeweilige Position der elektronischen Bauelemente (17, 18) angepasst sind, angesteuert wird,
- bei dem die Ausgleichsfolie (14) mit den daran eingebrachten Aussparungen (28) und die Trägerfolie (12) in einer Zusammenführstation (34) zusammengeführt und passergenau zueinander ausgerichtet zu einem Inlay (36) fixiert werden, wobei
- mit der Laserschneideinrichtung (27) zur Herstellung der Aussparungen (28), mit einer weiteren Laserschneideinrichtung oder mit einer Markierungseinrichtung (30) für jeden Nutzen (16) oder eine Gruppe von Nutzen (16) eine Steuermarke (32) auf die Ausgleichsfolie (14) in Abhängigkeit von der jeweiligen erfassten Position des elektronischen Bauelementes (17, 18) auf der Trägerfolie (12) aufgebracht wird.

2. Verfahren nach Anspruch 1, **dadurch gekennzeichnet, dass** vor dem passergenauen Zusammenführen der Ausgleichsfolie (14) und der Trägerfolie (12) für jeden Nutzen (16) oder jede Gruppe von Nutzen (16) die Steuermarke (32) aufgebracht wird.

3. Verfahren nach Anspruch 2, **dadurch gekennzeichnet, dass** vor dem passergenauen Zusammenführen der Ausgleichsfolie (14) und der Trägerfolie (12) die Laserschneideinrichtung (27) zum Herstellen der Aussparung (28) mit hoher Leistung und dieselbe Laserschneideinrichtung (27) zur Herstellung der Steuermarke (32) mit niedriger Leistung betrieben wird, oder dass vor dem passergenauen Zusammenführen der Ausgleichsfolie (14) und der Trägerfolie (12) die Laserschneideinrichtung (27) zum Herstellen der Aussparung (28) mit hoher Leistung betrieben und eine weitere Laserschneideinrichtung oder Markierungseinrichtung (30) zur Herstellung der Steuermarke (32) angesteuert wird, die vorzugsweise der Laserschneideinrichtung (27) für die Herstellung der Aussparung (28) nachgeschalten positioniert wird.

4. Verfahren nach Anspruch 1, **dadurch gekennzeichnet, dass** nach der Herstellung des Inlays (36) auf die Ausgleichsfolie (14) durch die weitere Laserschneideinrichtung oder die Markierungseinrichtung (30) für jeden Nutzen (16) oder jede Gruppe von Nutzen (16) die Steuermarke (32) aufgebracht wird.

5. Verfahren nach einem der vorhergehenden Ansprüche, **dadurch gekennzeichnet, dass** die Trägerfolie (12) und die Ausgleichsfolie (14) beim Zusammenführen in der Zusammenführstation (34) zu einem Inlay (36), insbesondere durch Erwärmung der Trägerfolie (12) und Ausgleichsfolie (14), geheftet werden.

6. Verfahren nach einem der vorhergehenden Ansprüche, **dadurch gekennzeichnet, dass** die Trägerfolie (12) und die Ausgleichsfolie (14) durch die Aufbringung einer Zugbeanspruchung transportiert werden und vorzugsweise die Ausgleichsfolie (14) und die Trägerfolie (12) mit einer Verarbeitungsgeschwindigkeit von 1 bis 20 m/min zusammengeführt werden.

7. Verfahren nach Anspruch 1, **dadurch gekennzeichnet, dass** die Trägerfolie (12) und die, vorzugsweise unbedruckte, Ausgleichsfolie (14) als Rollenware oder als Bogen bereitgestellt werden.

8. Verfahren nach einem der vorhergehenden Ansprüche, **dadurch gekennzeichnet, dass** das hergestellte Inlay (36) in Bogen geschnitten wird.

9. Verfahren nach Anspruch 1, **dadurch gekennzeichnet, dass** als elektronische Bauelemente (17, 18) ein Halbleiterchip (17) und eine Antennenspule (18) vorgesehen sind und vorzugsweise die Halbleiterchips (17), die auf der Trägerfolie (12) als MehrfachNutzen, insbesondere als 24-Nutzen, aufgebracht sind, zeilen- und spaltenförmig zueinander ausgerichtet sind.

10. Verfahren nach Anspruch 9, **dadurch gekennzeichnet, dass** innerhalb eines Mehrfach-Nutzens von jedem Halbleiterchip (17) die Koordinaten (x1, y1; x2, y2; ...; xn, yn) erfasst werden.

11. Verfahren zur Herstellung eines Folienverbundes, insbesondere als Wert- oder Sicherheitsdokument oder für die Weiterverarbeitung zu einem Wert- oder Sicherheitsdokument, **dadurch gekennzeichnet, dass** auf eine oder beiden Außenseiten eines nach einem der Ansprüche 1 bis 10 hergestellten Inlays (36) zumindest eine Folie oder eine Schicht aufgebracht wird.

12. Vorrichtung zur Herstellung eines Inlays (36), insbesondere für die Weiterverarbeitung zu einem Wert- oder Sicherheitsdokument nach einem Verfahren gemäß den Ansprüchen 1 bis 10, mit einer ersten Transportfördereinrichtung zum Transport einer Trägerfolie (12) mit darauf positionierten elektronischen Bauelementen (17, 18), mit einer weiteren Transportfördereinrichtung zum Transportieren einer lasersensitiven Ausgleichsfolie (14), mit wenigstens einer dem Trägermaterial (12) zugeordnetem Bilderfassungseinrichtung (23), welche die Position der elektronischen Bauelements (17, 18) auf der Trägerfolie erfasst, mit einer Laserschneideinrichtung (27), welche zum Einbringen von Aussparungen (28) in die Ausgleichsfolie (14) vorgesehen ist, wobei die Bilderfassungseinrichtung (23) und die Laserschneideinrichtung (27) jeweils vor einer Zusammenführstation (34) zur Herstellung eines Inlays (36) aus der Trägerfolie (12) und der Ausgleichsfolie (14) angeordnet sind, und mit einer Datenverarbeitungseinrichtung (25), welche die durch die Bilderfassungseinrichtung (23) erfassten Daten der ermittelten Position des jeweiligen elektronischen Bauelements (17) zur Herstellung von einer passergenauen Aussparung (28) in der Ausgleichsfolie (14) weiter verarbeitet und an die Laserschneideinrichtung (27) zum Einbringen der Aussparungen (28) ausgibt, **dadurch gekennzeichnet, dass** die Laserschneideinrichtung (27) zur Herstellung von Aussparungen (28), eine weitere Laserschneideinrichtung oder eine Markierungseinrichtung (30) zur Herstellung von Steuermarken (32) auf die Ausgleichsfolie (14) in Abhängigkeit der erfassten Position des jeweiligen elektronischen Bauelements (17) zum Einbringen der Aussparung (28) und der Steuermarke (32) ansteuerbar ist.

13. Vorrichtung nach Anspruch 12, **dadurch gekennzeichnet, dass** in der Zusammenführstation (34) eine Bahnführung zur passergenauen Positionierung und Fixierung der Aussparungen (28) der Ausgleichsfolie (14) zu dem jeweiligen Halbleiterchip (17) der Trägerfolie (12) umfasst und vorzugsweise die passergenaue zueinander ausgerichtete Trägerfolie (12) und Ausgleichsfolie (14) mit einer Hefteinrichtung zumindest punktuell zueinander fixiert werden.

14. Vorrichtung nach Anspruch 12 oder 13, **dadurch gekennzeichnet, dass** die Markierungseinrichtung (30) als Lasermarkierungseinrichtung oder Druckeinrichtung, insbesondere als Ink-Jet-Druckeinrichtung, ausgebildet ist.

## Claims

1. A method of fabricating an inlay (36) for a film composite, in particular an inlay permitting further processing into a document of value or security document,
- wherein a carrier film (12) having a plurality of electronic components (17, 18) arranged thereon and related to each other is fed to an image acquisition device (23) by which at least the position of one electronic component (17, 18) is detected as a use feature (16),
- wherein a laser-sensitive compensating film (14) to be applied to the carrier film (12) is first fed to a laser cutting device (27),
- wherein the data concerning the position of the respective electronic components (17, 18) on the carrier film (12) as acquired by the image acquisition device (23) are communicated to the laser cutting device (27) and wherein the laser cutting device (27) designed for realising cutouts (28) that are adapted to the respective positions of the electronic components (17, 18) is activated,
- wherein the compensating film (14) including the cutouts (28) realised thereon and the carrier material (12) are combined in a combining station (34) and are fixed in a manner aligned with register accuracy with respect to each other so as to form an inlay (36), t
- wherein using the laser cutting device (27) designed for realising the cutouts (28), another laser cutting device or a marking device (30), one control mark (32) is applied to the compensating film (14) for each use feature (16) or array of use features (16), depending on the detected position of the respective electronic component (17, 18) on the carrier film (12).

2. The method as claimed in claim 1, **characterised in that** the combining of the compensating film (14) and the carrier film (12) with register accuracy is preceded by the application of the control mark (32) for each use feature (16) or group of use features (16).

3. The method as claimed in claim 2, **characterised in that** the combining of the compensating film (14) and the carrier film (12) with register accuracy is preceded by the operation of the laser cutting device (27) with a high laser power for realising the cutout (28) and by the operation of the same laser cutting device (27) with a low laser power for realising the control mark (32), or that the combining of the compensating film (14) and the carrier film (12) with register accuracy is preceded by operating the laser cutting device (27) with a high laser power for realising the cutout (28) and by activating another laser cutting device or marking device (30) for realising the control mark (32), said device being preferably positioned downstream of the laser cutting device (27) for realising the cutout (28).

4. The method as claimed in claim 1, **characterised in that** the fabrication of the inlay (36) is followed by the application of the control mark (32) on the compensating film (14) for each use feature (16) or array of use features (16) by means of the other laser cutting device or the marking device (30).

5. The method as claimed in any one of the preceding claims, **characterised in that** the carrier film (12) and the compensating film (14) are stitched to each other as they are combined into an inlay (36) in the combining station (34), said fixing being carried out, in particular, by heating of the carrier film (12) and the compensating film (14).

6. The method as claimed in any one of the preceding claims, **characterised in that** the carrier film (12) and the compensating film (14) are transported by applying a tension and preferably the carrier film (14) and the compensating film (12) are combined at a processing rate of between 1 m/min and 20 m/min.

7. The method as claimed in claim 1, **characterised in that** the carrier film (12) and the compensating film (14), which is preferably supplied in a non-printed condition, are provided either as a rollstock product or in sheet form.

8. The method as claimed in any one of the preceding claims, **characterised in that** once completed, the inlay (36) is cut into sheets.

9. The method as claimed in claim 1, **characterised in that** in terms of electronic components (17, 18) a semiconductor chip (17) and an antenna coil (18) are provided and **in that** preferably the semiconductor chips (17), which are applied to the carrier film (12) as sets of multiple use features, in particular as sets of 24 use features, are aligned with respect to one another in a pattern of rows and columns.

10. The method as claimed in claim 9, **characterised in that** within a set of multiple use features the coordinates (x1, y2; x2, y2; ...; xn, yn) of each semiconductor chip (17) are detected.

11. A method of fabricating a film composite, in particular as a document of value or security document or for further processing into a document of value or security document, **characterised in that** on one or on both of the outer faces of an inlay (36) fabricated according to any one of claims 1 to 10 at least one film or layer is applied.

12. An apparatus for fabricating an inlay (36), in particular for further processing into a document of value or security document according to a method as claimed in claims 1 to 10, comprising a first transporting and feeding device for transporting a carrier film (12) having electronic components (17, 18) positioned thereon; another transporting and feeding device for transporting a laser-sensitive compensating film (14); at least one image acquisition device (23) associated with the carrier material (12) which detects the position of the semiconductor chip on the carrier film; a laser cutting device (27) which is provided for realising cutouts (28) in the compensating film (14), with the image acquisition device (23) and the laser cutting device (27) being both arranged upstream of a combining station (34) for fabricating an inlay (36) from the carrier film (12) and the compensating film (14); and a data processing device (25) which processes the data of the detected position of the respective semiconductor chip (17) as acquired by the image acquisition device (23), with the aim of fabricating a cutout (28) in the compensating film (14) with register accuracy, and which outputs it to the laser cutting device (27) for realising the cutouts (28), **characterised in that** the laser cutting device (27) for realising cutouts (28), another laser cutting device or a marking device (30) for realising control marks (32) on the compensating film (14) depending on the detected position of the respective semiconductor chip (17) is activatable for realising the cutouts (28) and the control marks (32).

13. The apparatus as claimed in claim 12, **characterised in that** the combining station (34) comprises a web guiding system for positioning and securing the cutouts (28) of the compensating film (14) with register accuracy relative to the respective semiconductor chip (17) of the carrier film (12) and preferably the carrier film (12) and the compensating film (14) which are aligned with register accuracy with respect to each other are secured relative to each other spot-wise by means of a fixing device.

14. The apparatus as claimed in claim 12 or 13, **characterised in that** the marking device (30) is configured as a laser marking device or as a printing device, in particular an inkjet printing device.

## Revendications

1. Procédé destiné à fabriquer un inlay (36) pour un composite de feuilles, notamment un inlay en vue de la réalisation ultérieure d'un document de valeur ou de sécurité,
- dans lequel une feuille support (12) sur laquelle sont disposés plusieurs composants électroniques conjugués (17, 18) est amenée à un dispositif de saisie d'images (23) grâce auquel au moins la position d'un composant électronique (17, 18) est saisie en tant que flan imprimé (16),
- dans lequel une feuille de compensation (14) sensible au laser qui doit être appliquée sur la feuille support (12) est d'abord amenée à un dispositif de coupe au laser (27),
- dans lequel les données relatives à la position du composant électronique respectif (17, 18) sur la feuille support (12) saisies par le dispositif de saisie d'images (23) sont transmises au dispositif de coupe au laser (27), et dans lequel le dispositif de coupe au laser (27) est commandé afin de réaliser des évidements (28) qui sont adaptés à la position respective des composants électroniques (17, 18),
- dans lequel la feuille de compensation (14) dans laquelle ont été réalisés les évidements (28) et la feuille support (12) sont réunies dans une station d'assemblage (34) et, une fois ajustées l'une par rapport à l'autre avec un repérage parfait, sont fixées ensemble pour former un inlay (36),
- une marque de synchronisation (32) étant appliquée sur la feuille de compensation (14) pour chaque flan imprimé (16) ou pour un groupe de flans imprimés (16) en fonction de la position respective du composant électronique (17, 18) saisie sur la feuille support (12), et ce à l'aide du dispositif de coupe au laser (27) destiné à la réalisation des évidements (28), d'un autre dispositif de coupe au laser ou d'un dispositif de marquage (30).

2. Procédé selon la revendication 1, **caractérisé en ce que** pour chaque flan imprimé (16) ou groupe de flans imprimés (16), la marque de synchronisation (32) est appliquée avant la réunion en repérage parfait de la feuille de compensation (14) et la feuille support (12).

3. Procédé selon la revendication 2, **caractérisé en ce qu'**avant la réunion en repérage parfait de la feuille de compensation (14) et de la feuille support (12), le dispositif de coupe au laser (27) fonctionne à puissance élevée pour réaliser les évidements (28) et que le même dispositif de coupe au laser (27) fonctionne à basse puissance pour réaliser la marque de synchronisation (32), ou **en ce qu'**avant la réunion en repérage parfait de la feuille de compensation (14) et de la feuille support (12), le dispositif de coupe au laser (27) fonctionne à puissance élevée pour réaliser les évidements (28) et qu'un autre dispositif de coupe au laser ou un dispositif de marquage (30) est commandé pour réaliser la marque de synchronisation (32), lequel dispositif est de préférence positionné de manière à être branché en aval du dispositif de coupe au laser (27) destiné à la réalisation de l'évidement (28).

4. Procédé selon la revendication 1, **caractérisé en ce qu'**après la fabrication de l'inlay (36), la marque de synchronisation (32) est appliquée sur la feuille de compensation (14) par l'autre dispositif de coupe au laser ou le dispositif de marquage (30), et ce pour chaque flan imprimé (16) ou groupe de flans imprimés (16).

5. Procédé selon l'une quelconque des revendications précédentes, **caractérisé en ce que** la feuille support (12) et la feuille de compensation (14) sont pointées de manière à former un inlay (36), notamment par échauffement de la feuille support (12) et de la feuille de compensation (14), lorsqu'elles sont réunies dans la station d'assemblage (34).

6. Procédé selon l'une quelconque des revendications précédentes, **caractérisé en ce que** la feuille support (12) et la feuille de compensation (14) sont transportées grâce à l'application d'un effort de traction, et **en ce que** de préférence la feuille de compensation (14) et la feuille support (12) sont réunies avec une vitesse d'usinage comprise entre 1 et 20 m/min.

7. Procédé selon la revendication 1, **caractérisé en ce que** la feuille support (12) et la feuille de compensation (14), de préférence non imprimée, sont livrées sous forme de rouleaux ou de feuilles.

8. Procédé selon l'une quelconque des revendications précédentes, **caractérisé en ce que** l'inlay (36), une fois réalisé, est coupé en feuilles.

9. Procédé selon la revendication 1, **caractérisé en ce qu'**une puce semi-conductrice (17) et une bobine-antenne (18) sont prévues en tant que composants électroniques (17, 18), et **en ce que** de préférence les puces semi-conductrices (17) qui sont appliquées sur la feuille support (12) en tant que flans imprimés multiples, notamment sous forme d'unités de 24 flans, sont disposées entre elles sous forme de lignes et de colonnes.

10. Procédé selon la revendication 9, **caractérisé en ce qu'**à l'intérieur d'un flan imprimé multiple sont saisies les coordonnées (x1, y1; x2, y2; ...; xn, yn) de chaque puce semi-conductrice (17).

11. Procédé destiné à fabriquer un composite de feuilles, notamment en tant que document de valeur ou de sécurité ou en vue de la réalisation ultérieure d'un document de valeur ou de sécurité, **caractérisé en ce qu'**au moins une feuille ou couche est appliquée sur une face extérieure ou les deux faces extérieures d'un inlay (36) fabriqué selon l'une quelconque des revendications 1 à 10.

12. Dispositif destiné à fabriquer un inlay (36), notamment en vue de la réalisation ultérieure d'un document de valeur ou de sécurité conformément à un procédé selon l'une quelconque des revendications 1 à 10, avec un premier dispositif d'avancement destiné à transporter une feuille support (12) sur laquelle sont positionnés des composants électroniques (17, 18), avec un autre dispositif d'avancement destiné à transporter une feuille de compensation (14) sensible au laser, avec au moins un dispositif de saisie d'images (23) affecté au matériau support (12) lequel saisit la position des composants électroniques (17, 18) sur la feuille support, avec un dispositif de coupe au laser (27) qui est prévu pour réaliser des évidements (28) dans la feuille de compensation (14), le dispositif de saisie d'images (23) et le dispositif de coupe au laser (27) étant disposés respectivement en amont d'une station d'assemblage (34) destiné à fabriquer un inlay (36) à partir de la feuille support (12) et de la feuille de compensation (14), et avec un dispositif de traitement de données (25) qui soumet à un traitement ultérieur les données relatives à la position déterminée du composant électronique respectif (17) saisies par le dispositif de saisie d'images (23) en vue de réaliser un évidement (28) en repérage parfait dans la feuille de compensation (14) et qui les transmet au dispositif de coupe au laser (27) afin de réaliser les évidements (28), **caractérisé en ce que** le dispositif de coupe au laser (27) destiné à réaliser des évidements (28), un autre dispositif de coupe au laser ou dispositif de marquage (30) destiné à réaliser des marques de synchronisation (32) sur la feuille de compensation (14) peut être commandé en fonction de la position saisie du composant électronique respectif (17) en vue de réaliser l'évidement (28) et la marque de synchronisation (32).

13. Dispositif selon la revendication 12, **caractérisé en ce que** la station d'assemblage (34) comprend un guide de bande destiné à positionner et à fixer les évidements (28) de la feuille de compensation (14) en repérage parfait par rapport à la puce semi-conductrice respective (17) de la feuille support (12), et **en ce que** de préférence la feuille support (12) et la feuille de compensation (14) orientées en repérage parfait l'une par rapport à l'autre sont fixées entre elles au moins par points avec un dispositif de pointage.

14. Dispositif selon la revendication 12 ou 13, **caractérisé en ce que** le dispositif de marquage (30) est réalisé en tant que dispositif de marquage au laser ou de dispositif d'impression, notamment en tant que dispositif d'impression à jet d'encre.
